# EUROPEAN PATENT SPECIFICATION

(11) **EP 3 009 482 B1**
(45) Date of publication and mention of the grant of the patent: **03.10.2018**
(21) Application number: 15189062.1
(22) Date of filing: 09.10.2015
(51) Int. Cl.: C09D 5/00

(54) **COPPER COLOURED PAINT**
KUPFERFARBENE ANSTRICHFARBE
PEINTURE COLORÉE DE CUIVRE

(30) Priority: 13.10.2014 WO PCT/CN2014/088486
(43) Date of publication of application: 20.04.2016
(73) Proprietor: Heraeus Deutschland GmbH & Co. KG, 63450 Hanau (DE)
(72) Inventor: Dietz, Karlheinz, 20030 Shanghai (CN); Izzy, Cai, Shanghai (CN); Sheng, Shirley, Shanghai (CN); Sievi, Robert, 97833 Framersbach (DE); Greczmiel, Michael, 60596 Frankfurt (DE)
(74) Representative: Herzog, Fiesser & Partner Patentanwälte PartG mbB

(56) References cited:
- EP-A1- 1 666 175
- EP-A1- 2 145 918
- EP-A1- 2 607 432
- WO-A1-01/51573
- DE-C1- 3 809 541
- US-A1- 2009 022 995

## Description

### Field of the Invention

The invention generally relates to an Au comprising composition, in particular for use as paint, preferably a copper coloured paint. In particular, the invention relates to a composition, a process for providing a coloured surface, a process for its application to a substrate, preferably a ceramic, and coloured surfaces thusly obtainable.

### Background of the Invention

The use of paints to produce metallic colouring of surfaces is known and its application is wide ranging, including decoration of kitchenware and crockery, ornaments, furniture and interior design wares. There have been a number of attempts to improve such paints, both in terms of the colours available and the applicability to different surfaces.

A number of attempts have been made in the prior art to provide gold coloured paints, amongst them are DE3809541C1 which investigates the use of silicon compounds in the preparation of gold based paints and EP1272574A1 which investigates the use of set of inks for providing a metallic colour on a surface.

There still remains a need in the state of the art for improved paints, in particular copper coloured paints.

### Summary of the Invention

The invention is generally based on the object of overcoming at least one of the problems encountered in the state of the art in relation to coloured paints.

More specifically, the invention is further based on the object of providing a composition which can be employed for providing a copper colouring to a surface, in particular a deep copper colour. It is further an object of the invention to provide a composition which can be employed for providing a copper colouring to a surface which displays good physical adhesion and chemical resistance.

A contribution to achieving at least one of the above described objects is made by the subject matter of the category forming claims of the invention. A further contribution is made by the subject matter of the dependent claims of the invention which represent specific embodiments of the invention.

### Detailed Description

A contribution to achieving at least one of the above described objects is made by the following embodiments of the invention.
|1| A composition comprising the following components
   a. At least about 30 wt. % organic vehicle;
   b. About 0.5 to about 35 wt. %, preferably about 1 to about 20 wt. %, more preferably about 1.5 to about 10 wt. %, most preferably about 2 to about 7 wt. %, of Au as such present in the composition in the form of a Au organic compound;
   c. About 0.1 to about 10 wt. %, preferably about 0.01 to about 10, more preferably about 0.05 to about 8 wt. %, most preferably about 0.1 to about 4 wt. %, of a tetravalent metal as such present in the composition in form of a tetravalent metal organic compound;
   d. About 0 to about 6 wt. %, preferably about 0.1 to about 5 wt. %, more preferably about 0.5 to about 4 wt. %, most preferably about 1 to about 3 wt. %, of Bi as such present in the composition in the form of a Bi organic compound;
      wherein the wt. % are based on the total weight of the composition.
|2| The composition according to embodiment |1|, wherein the molar ratio of Au to the tetravalent metal is in the range from about 1:5 to about 20:1 preferably in the range from about 1:4 to about 15:1, more preferably in the range from about 1:1 to about 10:1.
|3| The composition according to any of the preceding embodiments, wherein the tetravalent metal is one or more selected from the group consisting of: Ti, Zr, Hf, Ce, Ni, Mn, Co, Cu, Sn or Si.
|4| The composition according to any of the preceding embodiments, wherein the tetravalent metal is Ti, Zr or both.
|5| The composition according to any of the preceding embodiments, wherein one or more of the following is satisfied:
   a. The Au organic compound is a resinate;
   b. The tetravalent metal organic compound comprises one or more alkoxy groups;
   c. The Bi organic compound is a resinate.
|6| The composition according to any of the preceding embodiments, wherein one or more of the following is satisfied:
   a. The Au in the Au organic compound is bonded to one or more O atoms or one or more S atoms or one or more O atoms and one or more S atoms;
   b. The tetravalent metal in the tetravalent metal organic compound is bonded to one or more O atoms;
   c. The Bi in the Bi organic compound is bonded to one or more O atoms or one or more S atoms or one or more O atoms and one or more S atoms.
|7| A composition according to any of the preceding embodiments, further comprising from about 0.001 to about 0.2 wt. %, preferably from about 0.005 to about 0.1 wt. %, more preferably from about 0.01 to about 0.05 wt. %, most preferably from about 0.02 to about 0.04 wt. %, rhodium as such present in the composition in the form of a rhodium organic compound.
|8| A composition according to any of the preceding embodiments, further comprising from about 0.005 to about 0.1 wt. %, preferably from about 0.008 to about 0.05 wt. %, more preferably from about 0.015 to about 0.04 wt. %, chromium as such present in the composition in the form of a chromium organic compound.
|9| A composition according to any of the preceding embodiments which when according to the test method provided herein is superimposed over a substrate and fired gives a surface with L* less than about 65 and b*/a* less than about 2.6, preferably less than about 2, more preferably less than about 1.6, further more preferably less than about 0.5, most preferably less than about 0.2.
|10| A process for the preparation of a coloured surface comprising the following steps:
   a. Providing a composition according to any of the preceding embodiments;
   b. Providing a substrate;
   c. Superimposing the composition over the substrate to obtain a precursor;
   d. Firing the precursor to obtain the coloured surface.
|11| The process according to embodiment |10|, wherein the substrate is selected from the group consisting of:
   a. A first substrate comprising at least about 50 wt. %, based on the total weight of the substrate, of SiO₂;
   b. A second substrate comprising at least about 50 wt. %, based on the total weight of the substrate, of Al₂O₃; and
|12| A coloured surface obtainable by a process according to embodiment |10| or |11|.
|13| The coloured surface according to embodiment |12|, wherein the coloured surface has L* less than about 65 and b*/a* less than about 2.6, preferably less than about 2, more preferably less than about 1.6, further more preferably less than about 0.5, most preferably less than about 0.2.

A further aspect of this disclosure relates to a layered composite according to the following embodiments |14| to |16|:
|14| A layered composite comprising:
   a) A substrate with a substrate surface;
   b) A layer at least partially superimposed over the substrate surface;
   wherein the layer has a L* less than about 65 and b*/a* less than about 2.6, preferably less than about 2, more preferably less than about 1.6, further more preferably less than about 0.5, most preferably less than about 0.2.
|15| The layer composite according to embodiment |14|, wherein the layer comprises the following layer components
   a. About 3 to about 80 wt. % preferably about 30 to about 80 wt. %, more preferably about 40 to about 75, most preferably about 50 to about 70 wt. %, of Au
   b. About 0.1 to about 25 wt. %, preferably about 1 to about 20 wt. %, more preferably about 5 to about 15 wt. %, most preferably about 8 to about 12 wt. %, of a tetravalent metal
   c. About 0 to about 40 wt. %, preferably about 5 to about 35 wt. %, more preferably about 10 to about 30 wt. %, most preferably about 15 to about 28 wt. %, of Bi.
|16| The layer composite according to embodiment |14| or |15|, wherein the molar ratio of Au to the tetravalent metal in the layer is in the range from about 1:5 to about 20:1, preferably in the range from about 1:4 to about 15:1, more preferably in the range from about 1:1 to about 10:1.

### Composition

Preferred compositions according to the invention are suitable for use as paints to provide a colouring to a surface, preferably a copper colouring, more preferably a deep copper colouring. Preferred compositions comprise as composition constituents:
a. At least about 30 wt. % organic vehicle;
b. About 0.5 to about 35 wt. %, preferably about 1 to about 20 wt. %, more preferably about 1.5 to about 10 wt. %, most preferably about 2 to about 7 wt. %, of Au as such present in the composition in the form of a Au organic compound;
c. About 0.1 to about 10 wt. %, preferably about 0.01 to about 10, more preferably about 0.05 to about 8 wt. %, most preferably about 0.1 to about 4 wt. %, of a tetravalent metal as such present in the composition in form of a tetravalent metal organic compound;
d. About 0 to about 6 wt. %, preferably about 0.1 to about 5 wt. %, more preferably about 0.5 to about 4 wt. %, most preferably about 1 to about 3 wt. %, of Bi as such present in the composition in the form of a Bi organic compound;
   wherein the wt. % are based on the total weight of the composition.

In one embodiment of the invention, the content of bismuth in the composition is great than 0 wt. %.

In one embodiment, the composition has a viscosity in the range from about 5 to about 50 Pa·s, preferably in the range from about 10 to about 40 Pa·s, more preferably in the range from about 15 to about 30 Pa·s.

### Au organic compound

Preferred Au organic compounds in the context of the invention comprise gold and at least one organic moiety. The content and identity of Au organic compound in the composition is preferably chosen so as to contribute to fulfilment of at least one of the objects of the invention, preferably to allow the composition to be applied to a surface to give a copper colour.

Preferred Au organic compounds may by straight chain or cyclic, saturated or unsaturated, linear or cyclic, aromatic or non-aromatic.

In one embodiment, the Au organic compound comprises a ring, preferably 2 to 6 rings, more preferably 3 rings. In one aspect of this embodiment, the organic compound contains no aromatic groups. In one aspect of this embodiment, the Au organic compound has a general formula Au-S-R, wherein R is an organic moiety, preferably a hydrocarbon, comprising a ring, preferably 2 to 6 rings, more preferably 3 rings.

In one embodiment, the Au organic compound comprises from 1 to 5 carbon atoms per molecule. In another embodiment, the Au organic compound comprises from 6 to 10 carbon atoms per molecule. In another embodiment, the Au organic compound comprises from 11 to 20 carbon atoms per molecule. In another embodiment, the Au organic compound comprises from 21 to 40 carbon atoms per molecule.

In one embodiment of the invention, the Au organic compound comprises one or more Au-O-C bonds. In one embodiment of the invention, the Au organic compound comprise one or more Au-S-C bonds.

In one embodiment, the Au organic compound comprises one or more oxygen atoms or one or more sulphur atoms or one or more oxygen atoms and one or more sulphur atoms. In one aspect of this embodiment, the Au of the Au organic compound is bonded to one or more oxygen atoms or one or more sulphur atoms or one or more oxygen atoms and one or more sulphur atoms.

In one embodiment of the invention, the Au organic compound is a gold resinate, preferably a sulphurised gold resinate. Such resinates are based on one or more of the materials selected from the group consisting of: terpenes, terpene derivatives, balsams, balsam derivatives, copaiba and copaiba derivatives.

In one embodiment, the Au organic compound comprises one or more moieties derived from a terpene, wherein the terpene is preferably built up of isoprene units. The terpene derived moiety preferably comprises a radical with the general formula:

H(C₅H₈)ₙ

Wherein n is a non-zero integer, preferably in the range from 1 to about 20, more preferably in the range from about 2 to about 15, most preferably in the range from about 3 to about 10. It is preferred that the resinate comprises one or more O atoms or one or more S atoms or one or more O atoms and one or more S atoms. In one embodiment, the Au resinate comprises one or more moieties with a chemical formula selected from the group consisting of: C₅H₉S, C₁₀H₁₇S, C₁₅H₂₅S, C₂₀H₃₃S, C₂₅H₄₁S, C₃₀H₄₉S, C₃₅H₅₇S, C₄₀H₆₅S, C₄₅H₇₃S, C₅₀H₈₁S. In one embodiment, the Au resinate comprises one or more moieties with a chemical formula selected from the group consisting of: C₅H₉O, C₁₀H₁₇O, C₁₅H₂₅O, C₂₀H₃₃O, C₂₅H₄₁O, C₃₀H₄₉O, C₃₅H₅₇O, C₄₀H₆₅O, C₄₅H₇₃O, C₅₀H₈₁O.

In one embodiment of the invention, the Au organic compound comprises one or more carboxylate groups, preferably one or more fatty acid anions.

Preferred carboxylate groups have the general formula:

CH₃(CH₂)ₙCOO⁻

Wherein n is an integer in the range from 0 to about 50, preferably in the range from about 2 to about 40, more preferably in the range from about 4 to about 30, most preferably in the range from about 6 to about 24. It is preferred that n is even.

### Tetravalent metal organic compound

Preferred tetravalent metal organic compounds in the context of the invention comprise one or more tetravalent metals and at least one organic moiety. The content and identity of tetravalent metal organic compound in the composition is preferably chosen so as to contribute to fulfilment of at least one of the objects of the invention, preferably to allow the composition to be applied to a surface to give a copper colour.

Preferred tetravalent metals in this context are one or more selected from the group consisting of: Ti, Zr, Hf, Ce, Ni, Mn, Co, Cu, Sn or Si, preferably Zr or Ti, or both. In one embodiment, the tetravalent metal is Ti. In one embodiment of the invention, the composition comprises one tetravalent metal compound, in another embodiment it comprises two distinct tetravalent metal organic compounds, in another embodiment it comprises three distinct tetravalent metal organic compounds, in another embodiment it comprises four distinct tetravalent metal organic compounds.

Preferred tetravalent metal organic compounds may by straight chain or cyclic, saturated or unsaturated, linear or cyclic, aromatic or non-aromatic.

In one embodiment, the tetravalent metal organic compound comprises from 1 to 5 carbon atoms per molecule. In another embodiment, the tetravalent metal organic compound comprises from 6 to 10 carbon atoms per molecule. In another embodiment, the tetravalent metal organic compound comprises from 11 to 20 carbon atoms per molecule. In another embodiment, the tetravalent metal organic compound comprises from 21 to 40 carbon atoms per molecule.

In one embodiment of the invention, the tetravalent metal organic compound comprises one or more M-O-C bonds. In one embodiment of the invention, the Au organic compound comprises one or more M-S-C bonds.

In one embodiment, the tetravalent metal organic compound comprises one or more oxygen atoms or one or more sulphur atoms or one or more oxygen atoms and one or more sulphur atoms. In one aspect of this embodiment, the tetravalent metal of the tetravalent metal organic compound is bonded to one or more oxygen atoms or one or more sulphur atoms or one or more oxygen atoms and one or more sulphur atoms.

In one embodiment of the invention, the tetravalent metal organic compound is a tetravalent metal resinate.

In one embodiment, the tetravalent metal organic compound comprises one or more moieties derived from a terpene, wherein the terpene is preferably built up of isoprene units. The terpene derived moiety preferably comprises a radical with the general formula:

H(C₅H₈)ₙ

Wherein n is a non-zero integer, preferably in the range from 1 to about 20, more preferably in the range from about 2 to about 15, most preferably in the range from about 3 to about 10. It is preferred that the resinate comprise one or more O atoms or one or more S atoms or one or more O atoms and one or more S atoms. In one embodiment, the tetravalent metal resinate comprises one or more moieties with a chemical formula selected from the group consisting of: C₅H₉S, C₁₀H₁₇S, C₁₅H₂₅S, C₂₀H₃₃S, C₂₅H₄₁S, C₃₀H₄₉S, C₃₅H₅₇S, C₄₀H₆₅S, C₄₅H₇₃S, C₅₀H₈₁S. In one embodiment, the Au resinate comprises one or more moieties with a chemical formula selected from the group consisting of: C₅H₉O, C₁₀H₁₇O, C₁₅H₂₅O, C₂₀H₃₃O, C₂₅H₄₁O, C₃₀H₄₉O, C₃₅H₅₇O, C₄₀H₆₅O, C₄₅H₇₃O, C₅₀H₈₁O.

In one embodiment of the invention, the tetravalent metal organic compound comprises one or more carboxylate groups, preferably one or more fatty acid anions.

Preferred carboxylate groups have the general formula:

CH₃(CH₂)ₙCOO⁻

Wherein n is an integer in the range from 0 to about 50, preferably in the range from about 2 to about 40, more preferably in the range from about 4 to about 30, most preferably in the range from about 6 to about 24. It is preferred that n is even.

In one embodiment, the tetravalent metal organic compound comprises one or more alkoxy moieties, preferably with the general formula:

CH₃(CH₂)ₙO⁻

Wherein n is an integer in the range from 0 to about 20, preferably in the range from about 1 to about 15, more preferably in the range from about 2 to about 10.

In one embodiment of the invention, the composition comprises a titanate, preferably an alkyl titanate, more preferably butyl titanate.

### Bi organic compound

Preferred Bi organic compounds in the context of the invention comprise bismuth and at least one organic moiety. The content and identity of Bi organic compound in the composition is preferably chosen so as to contribute to fulfilment of at least one of the objects of the invention, preferably to allow the composition to be applied to a surface to give a copper colour.

Preferred Bi organic compounds may by straight chain or cyclic, saturated or unsaturated, linear or cyclic, aromatic or non-aromatic.

In one embodiment, the Bi organic compound comprises from 1 to 5 carbon atoms per molecule. In another embodiment, the Bi organic compound comprises from 6 to 10 carbon atoms per molecule. In another embodiment, the Bi organic compound comprises from 11 to 20 carbon atoms per molecule. In another embodiment, the Bi organic compound comprises from 21 to 40 carbon atoms per molecule.

In one embodiment of the invention, the Bi organic compound comprises one or more Bi-O-C bonds. In one embodiment of the invention, the Bi organic compound comprise one or more Bi-S-C bonds.

In one embodiment, the Bi organic compound comprises one or more oxygen atoms or one or more sulphur atoms or one or more oxygen atoms and one or more sulphur atoms. In one aspect of this embodiment, the Bi of the Bi organic compound is bonded to one or more oxygen atoms or one or more sulphur atoms or one or more oxygen atoms and one or more sulphur atoms.

In one embodiment of the invention, the Bi organic compound is a bismuth resinate.

In one embodiment, the Bi organic compound comprises one or more moieties derived from a terpene, wherein the terpene is preferably built up of isoprene units. The terpene derived moiety preferably comprises a radical with the general formula:

H(C₅H₈)ₙ

Wherein n is a non-zero integer, preferably in the range from 1 to about 20, more preferably in the range from about 2 to about 15, most preferably in the range from about 3 to about 10. It is preferred that the resinate comprises one or more O atoms or one or more S atoms or one or more O atoms and one or more S atoms. In one embodiment, the Bi resinate comprises one or more moieties with a chemical formula selected from the group consisting of: C₅H₉S, C₁₀H₁₇S, C₁₅H₂₅S, C₂₀H₃₃S, C₂₅H₄₁S, C₃₀H₄₉S, C₃₅H₅₇S, C₄₀H₆₅S, C₄₅H₇₃S, C₅₀H₈₁S. In one embodiment, the Bi resinate comprises one or more moieties with a chemical formula selected from the group consisting of: C₅H₉O, C₁₀H₁₇O, C₁₅H₂₅O, C₂₀H₃₃O, C₂₅H₄₁O, C₃₀H₄₉O, C₃₅H₅₇O, C₄₀H₆₅O, C₄₅H₇₃O, C₅₀H₈₁O.

In one embodiment of the invention, the Bi organic compound comprises one or more carboxylate groups, preferably one or more fatty acid anions.

Preferred carboxylate groups have the general formula:

CH₃(CH₂)ₙCOO⁻

Wherein n is an integer in the range from 0 to about 50, preferably in the range from about 2 to about 40, more preferably in the range from about 4 to about 30, most preferably in the range from about 6 to about 24. It is preferred that n is even.

In one embodiment, the bismuth organic compound is bismuth octoate.

### Organic vehicle

Preferred organic vehicles comprise one or more organic compounds, one or more of the organic compounds being liquid under atmospheric conditions (25 °C, 1 bar). The organic vehicle preferably contributes to one or more of the above mentioned objects. Organic vehicles which favour printability of the composition are preferred.

Preferred constituents of the organic vehicle are one or more selected from the group consisting of: an alcohol, an alkane, an alkene, an ester, an ether, a terpene, a terpene derivative.

Preferred terpenes are preferably built up of isoprene units. The terpene preferably has the general formula:

(C₅H₈)ₙ

Wherein n is a non-zero integer, preferably in the range from 1 to about 20, more preferably in the range from about 2 to about 15, most preferably in the range from about 3 to about 10.

Preferred terpenes have a chemical formula selected from the group consisting of: C₅H₈, C₁₀H₁₆, C₁₅H₂₄, C₂₀H₃₂, C₂₅H₄₀, C₃₀H₄₈, C₃₅H₅₆, C₄₀H₆₄, C₄₅H₇₂, C₅₀H₈₀. In one embodiment, the terpene is sulphurised.

Preferred esters are preferably based on a diol or a triol, more preferably a triol. The preferred diol in this context is glycol. The preferred triol in this context is glycerol.

Preferred esters, preferably based on diols or trio Is, comprise one or more carboxylate radicals, preferably with the general formula:

CH₃(CH₂)ₙCOO⁻

Wherein n is an integer in the range from 0 to about 50, preferably in the range from about 2 to about 40, more preferably in the range from about 4 to about 30, most preferably in the range from about 6 to about 24. It is preferred that n is even.

Preferred alcohols in this context comprise 1 to about 5 carbon atoms, or about 6 to about 10 carbon atoms, or about 11 to about 20 carbon atoms.

Preferred alcohols are based on terepines, the preferred alcohol being terpineol.

Preferred alkanes comprise 1 to about 5 carbon atoms, or about 6 to about 10 carbon atoms, or about 11 to about 20 carbon atoms.

### Colour

A contribution to achieving at least one of the above mentioned objects is made by a composition which, when applied to a surface and fired, yields a coloured surface, preferably with a copper colour, more preferably with a deep copper colour. It is preferred that the copper colour is a red copper colour. One way to express the colour, particularly the preferred colour is in terms of L*, a*, b* values.

### Application to a surface

The composition according to the invention may be applied to a surface in any way in which the skilled person deems fit in order to achieve the objects of the invention. Preferred methods of application are one or more selected from the group consisting of: printing, spraying, dripping, pouring, splashing, brushing and scraping, preferably printing.

Preferred methods of printing are one or more selected from the group consisting of: Screen printing, inkjet printing, transfer printing and offset printing, preferably screen printing.

### Firing

Firing preferably reduces the content of volatile material in the composition by at least about 90 wt. %, preferably at least about 95 wt. %, more preferably at least about 99 wt. %, to obtain a solid coloured surface.

In on embodiment, firing temperatures are in the range from about 200 to about 1000 °C, preferably in the range from about 300 to about 800 °C, more preferably in the range from about 400 to about 600 °C.

### Substrates

Preferred substrates are thermal insulators.

In one embodiment of the invention, the substrate contains at least 50 wt. %, preferably at least 60 wt. %, more preferably at least 70 wt. % or inorganic oxide, preferably one or more selected from the group consisting of: silicon oxide, aluminium oxide.

Preferred substrates are porcelain or glass, preferably one or more selected from the group consisting of: a teapot, a mug, a glass, a teacup, a bowl, a dish, a cooking pot, a casserole pot, a frying pan, a saucepan, a wok, a griddle and a jug. Each of these is considered to be a preferred embodiment of the invention.

### Description of the Drawings

The invention is now explained by means of figures which are intended for illustration only and are not to be considered as limiting the scope of the invention.

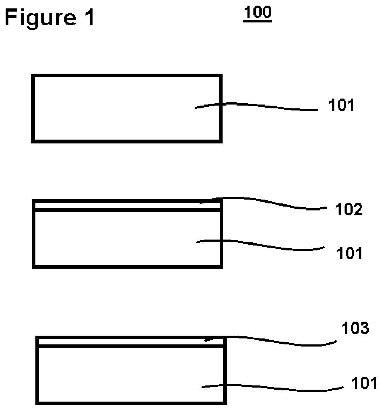

Figure 1 shows a preferred process 100 for providing a coloured surface. From top to bottom: First a substrate 101, preferably SiO₂ or AlO₂ is provided. Next, a composition 102 according to the invention is superimposed over a surface of the substrate 101. Next the substrate 101 is fired, preferably a temperature of approximately 500 °C such that the composition 102 is converted into a coloured surface 103, preferably a copper coloured surface.

### Test Methods

### Colour measurement L*,a*,b*

The colour of the composition according to any embodiment of the invention is given by colour values in the CIE L*a*b* colour space defined in the international standard EN ISO 11664-4. Colour measurements were performed using a Konica Minolta Spectrophotometer CM-700d (from Konica Minolta Sensing China, Shanghai) in the CIE L*a*b* colour space system. After calibration with two devices representing ideal black and ideal white background as supplied by Minolta-Konica, measurements were performed by placing the instrument on fired gold layer in SCE mode. In case of transparent substrates the samples were placed on the ideal white background from Minolta. Five measurements were recorded and averaged. For these measurements the paste was applied onto quartz plates HSQ 100 (Heraeus Quarzglas GmbH & Co KG) with 2 mm thickness and fired with the following profile: heating from room temperature to 700°C in 30 minutes, holding at 700°C for 10 minutes followed by ballistic cooling.

### Elemental composition of the composition

Inductively coupled plasma atomic emission spectroscopy (ICP) was used to determine the content of the metals Ag, Au, B, Bi, Ca, Cr, Cu, Ni, Ir, Pd, Pt, Rh, V, Zn, Zr, Si, Sn, Os and Ti in the compositions. The instrument used was a Varian Vista-MPX (from Varian Inc.) and ICP expert software (from Varian Inc.).

Calibration is done by preparation of two calibration samples for the following metals by mixing standard solutions of the metals with known metal content with aqua regia (mix of concentrated HCl and HNO₃ with the ratio 3:1). In the following table the concentrations of the calibration solutions is given in mg/l.

| Metals | Metal concentration Calibration solution 1 [mg/l] | Metal concentration Calibration solution 2 [mg/l] |
|---|---|---|
| Ag | 35 | 70 |
| Au | 50 | 150 |
| Ir, Pd, Pt, Rh, Ru | 15 | 30 |
| Si, Ti, V, Sn, Zr, B, Bi, Ca, Cr, Cu, In, Ni, Zn | 10 | 20 |
| Os | 4 | 7 |

Sample measurement: 0.10 +/- 0.02 g of the sample are mixed with 3 ml HNO₃ and 9 ml concentrated HCl, and treated in a Multiwave 3000 microwave oven (from Anton Paar) at 800-1200 W for 60 min. The resulting solution is added to 9 ml of 50 vol-% HCl solution and measured.

The ICP instrument was operated under the following conditions:

| | Ag, Au, Ir, Pd, Pt, Rh, Ru, Si, Ti, V, Sn, Zr, B, Bi, Ca, Cr, Cu, In, Ni, Zn | Os |
|---|---|---|
| Power: | 1.25 kW | 1.20 kW |
| Plasma gas Argon | 15.0 l/min | 16.5 l/min |
| Auxiliary gas Argon | 1.50 l/min | 1.50 l/min |
| Pressure of nebulizer gas Argon | 220 kPa | 180 kPa |
| Repetition interval | 20 s | 15 s |
| Stabilizing time | 45 s | 45 s |
| Observation height | 10 mm | 11 mm |
| Suction time | 45 s | 35 s |
| Purging time | 10 s | 10 s |
| Pumping time | 20 s | 15 s |
| Repetitions | 3 | 3 |

The following wavelengths [nm] were used to evaluate the metal content:
Ag 338.29; In 303.94; Sn 181.06 520.91 325.61 189.93 546.55; Ir 254.40; Ti 334.19; Au 197.74 263.97 336.12 242.79; Pd 229.65; V 292.40 267.59 340.46 309.31; B 208.96 360.96; Zn 206.20; 249.77; Pt 203.65 334.50; Bi 223.06 214.42; Zr 343.82 306.77 217.47 349.62; Ca 396.85; Rh 249.08 422.67 343.49; Cr 205.56 369.24 283.56; Ru 240.27; Cu 224.70 245.66 324.75; Si 251.61; Ni 216.55 288.16 231.60; Os 225.59 and 236.74.

### Abrasion

For the abrasion test an abrasion tester Model "Payne Pin Abrasion Tester PPAT2" (from Anderen Ltd., UK) was used. A pin with 5 mm diameter was wrapped with cotton and a load of 100 g was used to press the pin onto the surface. The number of strokes was recorded after which the first visible scratches appeared. Three measurements were recorded and averaged.

### Adhesion

Adhesion was tested using a tape TESA 4124 (from tesa Beiersdorf) which was thoroughly applied to a flat surface of the gold layer on the substrate. It was firmly rubbed and pressed onto it and subsequently torn away by hand at a 90° angle with respect to the surface. The removed tape is mounted onto a white piece of paper and the test is passed when there are no visible particles from the tested layer adhering to the tape.

### Dishwasher test

A dishwasher test was performed in accordance with DIN EN 12875-1 and DIN EN 12875-2. A professional dishwasher Miele G7835 CD (Miele, Guetersloh) was used and the detergent "finish classic" (Rickett-Benckieser, Ladenburg) was applied. In table 2 as "pass" indicates passing the test after at least 500 cycles, whereas "fail" denotes not passing the test after 500 cycles.

### Examples

### Preparation of the composition

The constituents according to table 1 were mixed for 10 minutes at 25 °C, 1 bar, using magnetic stirring.

**Table 1**

| Example | Au sulphoresinate - wt. % | Butyl titanate - wt. % | Bismuth octoate - wt. % | Chromium octoate - wt. % | Rh resinate - wt. % | Organic vehicle |
|---|---|---|---|---|---|---|
| 1 (inventive) | 10.42 | 3.48 | 7 | 1 | 0.5 | to 100 wt. % |
| 2 (comparative) | 10.42 | 0 | 7 | 1 | 0.5 | to 100 wt. % |
| 3 (comparative) | 10.42 | 3.48 | 0 | 1 | 0.5 | to 100 wt. % |
| 4 (comparative) | 10.42 | 3.48 | 7 | 0 | 0.5 | to 100 wt. % |
| 5 (comparative) | 10.42 | 3.48 | 7 | 1 | 0 | to 100 wt. % |

### Application to a substrate

The pastes were applied by screen printing using polyester screen 140T commercially obtainable from Sefar AG, Switzerland, to a silicon dioxide substrate commercially obtainable by Heraeus Quarzglas GmbH & Co. KG, Germany. Then the paste on the substrate was heated to 700°C over 30 min. and held by 700°C for 10 min. and cooled down to room temperature ballistically. and the colour values L*, a* & b* measured according to the test method. The results are given in table 2.

**Table 2**

| Example | L* | b*/a* | Adhesion | Dishwasher test | Scratch resistance normalized to example 1 |
|---|---|---|---|---|---|
| 1 (inventive) | 34 | 1.07 | Pass | Pass | 1 |
| 2 (comparative) | 66 | 3.1 | Pass | Pass | 0.5 |
| 3 (comparative) | 35 | 1.05 | Pass | Fail | 1 |
| 4 (comparative) | 36 | 1.08 | Fail | Fail | 1 |
| 5 (comparative) | 33 | 1.06 | Fail | Pass | 1 |

The colour of the comparative example 2 was gold, not copper as required.

### Figure References

- 100: Application process
- 101: Substrate
- 102: Composition
- 103: Coloured surface

## Claims

1. A composition comprising the following components
a. At least 30 wt. % organic vehicle;
b. 0.5 to 35 wt. % of Au as such present in the composition in the form of a Au organic compound;
c. 0.1 to 10 wt. % of a tetravalent metal as such present in the composition in form of a tetravalent metal organic compound;
d. 0 to 6 wt. % of Bi as such present in the composition in the form of a Bi organic compound; wherein the wt. % are based on the total weight of the composition.

2. The composition according to claim 1, wherein the molar ratio of Au to the tetravalent metal is in the range from about 1:5 to about 20:1.

3. The composition according to any of the preceding claims, wherein the tetravalent metal is one or more selected from the group consisting of: Ti, Zr, Hf, Ce, Ni, Mn, Co, Cu, Sn or Si.

4. The composition according to any of the preceding claims, wherein the tetravalent metal is Ti, Zr or both,

5. The composition according to any of the preceding claims, wherein one or more of the following is satisfied:
a. The Au organic compound is a resinate;
b. The tetravalent metal organic compound comprises one or more alkoxy groups;
c. The Bi organic compound is a resinate.

6. The composition according to any of the preceding claims, wherein one or more of the following is satisfied:
a. The Au in the Au organic compound is bonded to one or more O atoms or one or more S atoms or one or more O atoms and one or more S atoms;
b. The tetravalent metal in the tetravalent metal organic compound is bonded to one or more O atoms;
c. The Bi in the Bi organic compound is bonded to one or more O atoms or one or more S atoms or one or more O atoms and one or more S atoms.

7. A composition according to any of the preceding claims, further comprising from about 0.001 to about 0.2 wt. % rhodium as such present in the composition in the form of a rhodium organic compound.

8. A composition according to any of the preceding claims, further comprising from about 0.005 to about 0.1 wt. % chromium as such present in the composition in the form of a chromium organic compound.

9. A composition according to any of the preceding claims which when according to the test method provided herein is superimposed over a substrate and fired gives a surface with L* less than about 65 and b*/a* less than about 2.6.

10. A process for the preparation of a coloured surface comprising the following steps:
a. Providing a composition according to any of the preceding claims;
b. Providing a substrate;
c. Superimposing the composition over the substrate to obtain a precursor;
d. Firing the precursor to obtain the coloured surface.

11. The process according to claim 10, wherein the substrate is selected from the group consisting of:
a. A first substrate comprising at least about 50 wt. %, based on the total weight of the substrate, of SiO₂;
b. A second substrate comprising at least about 50 wt. %, based on the total weight of the substrate, of Al₂O₃; and

12. A coloured surface obtainable by a process according to claim 10 or 11.

13. The coloured surface according to claim 12, wherein the coloured surface has L* less than about 65 and b*/a* less than about 2.6.

## Patentansprüche

1. Zusammensetzung umfassend die folgenden Komponenten
a. mindestens 30 Gew.-% organisches Vehikel;
b. 0,5 bis 35 Gew.-% Au, das als solches in der Zusammensetzung in Form einer organischen Au-Verbindung vorliegt;
c. 0,1 bis 10 Gew.-% eines vierwertigen Metalls, das als solches in der Zusammensetzung in Form einer vierwertigen organischen Metallverbindung vorliegt;
d. 0 bis 6 Gew.-% Bi, das als solches in der Zusammensetzung in Form einer organischen Bi-Verbindung vorliegt;
wobei die Gew.-% auf das Gesamtgewicht der Zusammensetzung bezogen sind.

2. Zusammensetzung nach Anspruch 1, wobei das Molverhältnis von Au zu vierwertigem Metall im Bereich von etwa 1:5 bis etwa 20:1 liegt.

3. Zusammensetzung nach irgendeinem der vorhergehenden Ansprüche, wobei das vierwertige Metall eines oder mehr ist ausgewählt aus der Gruppe bestehend aus: Ti, Zr, Hf, Ce, Ni, Mn, Co, Cu, Sn oder Si.

4. Zusammensetzung nach irgendeinem der vorhergehenden Ansprüche, wobei das vierwertige Metall Ti, Zr oder beides ist.

5. Zusammensetzung nach irgendeinem der vorhergehenden Ansprüche, wobei eines oder mehr der Folgenden erfüllt ist:
a. die organische Au-Verbindung ist ein Resinat;
b. die organische vierwertige Metallverbindung umfasst eine oder mehr Alkoxygruppen;
c. die organische Bi-Verbindung ist ein Resinat.

6. Zusammensetzung nach irgendeinem der vorhergehenden Ansprüche, wobei eines oder mehr der Folgenden erfüllt ist:
a. das Au in der organischen Au-Verbindung ist an ein oder mehr O-Atome oder ein oder mehr S-Atome oder ein oder mehr O-Atome und ein oder mehr S-Atome gebunden;
b. das vierwertige Metall in der organischen vierwertigen Metallverbindung ist an ein oder mehr O-Atome gebunden;
c. das Bi in der organischen Bi-Verbindung, ist an ein oder mehr O-Atome oder ein oder mehr S-Atome oder ein oder mehr O-Atome und ein oder mehr S-Atome gebunden.

7. Zusammensetzung nach irgendeinem der vorhergehenden Ansprüche, ferner etwa 0,001 bis etwa 0,2 Gew.-% Rhodium umfassend, das als solches in der Zusammensetzung in Form einer organischen Rhodiumverbindung vorliegt.

8. Zusammensetzung nach irgendeinem der vorhergehenden Ansprüche, ferner etwa 0,005 bis etwa 0,1 Gew.-% Chrom umfassend, das als solches in der Zusammensetzung in Form einer organischen Chromverbindung vorliegt.

9. Zusammensetzung nach irgendeinem der vorhergehenden Ansprüche, die, wenn sie dem hier bereitgestellten Testverfahren entsprechend über ein Substrat überlagert und gebrannt wird, eine Oberfläche mit L* von weniger als etwa 65 und b*/a* von weniger als etwa 2,6 ergibt.

10. Verfahren für die Herstellung einer farbigen Oberfläche, umfassend die folgenden Schritte:
a. Bereitstellen einer Zusammensetzung nach irgendeinem der vorhergehenden Ansprüche;
b. Bereitstellen eines Substrats;
c. Überlagern der Zusammensetzung über das Substrat, um einen Vorläufer zu erhalten;
d. Brennen des Vorläufers, um die farbige Oberfläche zu erhalten.

11. Verfahren nach Anspruch 10, wobei das Substrat aus der Gruppe ausgewählt wird bestehend aus:
a. einem ersten Substrat umfassend mindestens etwa 50 Gew.-%, auf das Gesamtgewicht des Substrats bezogen, SiO₂;
b. einem zweiten Substrat umfassend mindestens etwa 50 Gew.-%, auf das Gesamtgewicht des Substrats bezogen, Al₂O₃.

12. Farbige Oberfläche, die durch ein Verfahren nach Anspruch 10 oder 11 erhältlich ist.

13. Farbige Oberfläche nach Anspruch 12, wobei die farbige Oberfläche L* von weniger als etwa 65 und b*/a* von weniger als etwa 2,6 aufweist.

## Revendications

1. Composition comprenant les composants suivants
a. au moins 30 % en poids de véhicule organique ;
b. 0,5 à 35 % en poids de Au tel que présent dans la composition sous la forme d'un composé organique de Au ;
c. 0,1 à 10 % en poids d'un métal tétravalent tel que présent dans la composition sous la forme d'un composé de métal tétravalent organique ;
d. 0 à 6 % en poids de Bi tel que présent dans la composition sous la forme d'un composé organique de Bi ;
dans laquelle les % en poids sont sur la base du poids total de la composition.

2. Composition selon la revendication 1, dans laquelle le rapport molaire de Au au métal tétravalent est dans la plage d'environ 1:5 à environ 20:1.

3. Composition selon l'une quelconque des revendications précédentes, dans laquelle le métal tétravalent est l'un ou plusieurs choisis dans le groupe constitué de : Ti, Zr, Hf, Ce, Ni, Mn, Co, Cu, Sn ou Si.

4. Composition selon l'une quelconque des revendications précédentes, dans laquelle le métal tétravalent est Ti, Zr ou les deux.

5. Composition selon l'une quelconque des revendications précédentes, dans laquelle l'un ou plusieurs des points suivants est satisfait :
a. le composé organique de Au est un résinate ;
b. le composé de métal tétravalent organique comprend un ou plusieurs groupes alcoxy ;
c. le composé organique de Bi est un résinate.

6. Composition selon l'une quelconque des revendications précédentes, dans laquelle l'un ou plusieurs des suivants est satisfait :
a. Au dans le composé organique de Au est lié à un ou plusieurs atomes O ou un ou plusieurs atomes S ou un ou plusieurs atomes O et un ou plusieurs atomes S ;
b. le métal tétravalent dans le composé de métal tétravalent organique est lié à un ou plusieurs atomes O ;
c. Bi dans le composé organique de Bi est lié à un ou plusieurs atomes O ou un ou plusieurs atomes S ou un ou plusieurs atomes O et un ou plusieurs atomes S.

7. Composition selon l'une quelconque des revendications précédentes, comprenant en outre d'environ 0,001 à environ 0,2 % en poids de rhodium tel que présent dans la composition sous la forme d'un composé organique de rhodium.

8. Composition selon l'une quelconque des revendications précédentes, comprenant en outre d'environ 0,005 à environ 0,1 % en poids de chrome tel que présent dans la composition sous la forme d'un composé organique de chrome.

9. Composition selon l'une quelconque des revendications précédentes qui, selon le procédé d'essai présentement décrit, est superposé sur un substrat et cuit, produit une surface avec L* inférieur à environ 65 et b*/a* inférieur à environ 2,6.

10. Procédé de préparation d'une surface colorée comprenant les étapes suivantes :
a. fourniture d'une composition selon l'une quelconque des revendications précédentes ;
b. fourniture d'un substrat ;
c. superposition de la composition sur le substrat pour obtenir un précurseur ;
d. cuisson du précurseur pour obtenir la surface colorée.

11. Procédé selon la revendication 10, dans lequel le substrat est choisi dans le groupe constitué de :
a. un premier substrat comprenant au moins environ 50 % en poids, sur la base du poids total du substrat, de SiO₂ ;
b. un deuxième substrat comprenant au moins environ 50 % en poids, sur la base du poids total du substrat, de Al₂O₃.

12. Surface colorée pouvant être obtenue par un procédé selon la revendication 10 ou 11.

13. Surface colorée selon la revendication 12, la surface colorée ayant L* inférieur à environ 65 et b*/a* inférieur à environ 2,6.
